# EUROPÄISCHE PATENTSCHRIFT

(11) **EP 1 137 723 B1**
(45) Veröffentlichungstag und Bekanntmachung des Hinweises auf die Patenterteilung: **11.02.2004**
(21) Anmeldenummer: 99963287.0
(22) Anmeldetag: 05.11.1999
(51) Int. Cl.: C09D 5/03

(54) **VERFAHREN ZUR HÄRTUNG VON PULVERLACKEN**
METHOD FOR HARDENING POWDER COATINGS
PROCEDE DE DURCISSEMENT DE LAQUES EN POUDRE

(30) Priorität: 13.11.1998 DE 19852268
(43) Veröffentlichungstag der Anmeldung: 04.10.2001
(73) Patentinhaber: E.I. DU PONT DE NEMOURS & CO. (INC.), Wilmington Delaware 19898 (US)
(72) Erfinder: BLATTER, Karsten, D-50374 Erftstadt (DE); THIELE, Olaf, D-84036 Landshut (DE)
(74) Vertreter: Gille Hrabal Struck Neidlein Prop Roos
(86) Internationale Anmeldenummer: PCT/EP1999/008504
(87) Internationale Veröffentlichungsnummer: WO 2000/029491

(56) Entgegenhaltungen:
- EP-A- 0 300 818
- PATENT ABSTRACTS OF JAPAN vol. 1995, no. 06, 31. Juli 1995 (1995-07-31) & JP 07 070548 A (ASAHI GLASS CO LTD), 14. März 1995 (1995-03-14)
- PATENT ABSTRACTS OF JAPAN vol. 008, no. 102 (C-222), 12. Mai 1984 (1984-05-12) & JP 59 016571 A (NIPPON PAINT KK), 27. Januar 1984 (1984-01-27)

## Beschreibung

Die Erfindung betrifft die Härtung von Pulverlacken auf metallischen und nichtmetallischen Substraten durch Bestrahlen mit Strahlung aus dem nahen Infrarot-Bereich (NIR).

Die dekorative oder funktionale Beschichtung von Oberflächen mit Pulverlacken hat aufgrund der hohen Wirtschaftlichkeit des Verfahrens sowie der günstigen Beurteilung aus der Sicht des Umweltschutzes bei der Beschichtung von Metallen ein breites Anwendungsgebiet gefunden. Zahlreiche Pulverlackformulierungen für die verschiedenen Einsatzgebiete wurden entwickelt. Die bisher zur Verfügung stehenden Verfahren zur Aushärtung von Pulverlacken erfordern, daß das auf dem Substrat abgeschiedene Pulver zunächst durch Erwärmen auf Temperaturen oberhalb der Glasübergangstemperatur bzw. des Schmelzpunktes der Pulverlackformulierung aufgeschmolzen wird. Als Wärmequellen dienen z.B. Konvektionsöfen, Infrarotstrahler oder Kombinationen aus beiden. Die Aushärtung der Pulverbeschichtung erfolgt für thermisch vernetzende Systeme typischerweise durch Erwärmen des gesamten zu beschichtenden Objektes auf Temperaturen zwischen 140 und 200°C für einen Zeitraum von ca. 10 bis 30 Minuten.

Für UV-härtende Pulverlackformulierungen erfolgt die Aushärtung der auf konventionellem Weg aufgeschmolzenen Pulverschicht mit Hilfe von ultravioletter Strahlung innerhalb von wenigen Sekunden. Die Vernetzung der Pulverlacke erfolgt in der Regel über die Polymerisation von Doppelbindungen oder zyklischen Ethern nach radikalischem oder kationischem Reaktionsmechanismus.

Beide Verfahren haben erhebliche Nachteile. Für thermisch härtende Pulverlacke sind hohe Temperaturen über einen Zeitraum von ca. 20 bis 30 Minuten erforderlich, die einerseits eine Beschichtung von temperaturempfindlichen Oberflächen wie Holz oder Kunststoff nicht zulassen und andererseits bei Metallteilen einen erheblichen Energieeinsatz erfordern. Der Einsatz von UV-härtenden Pulverlacken erfordert zwei Prozeßschritte, da zunächst das Pulver durch Erwärmung aufgeschmolzen werden muß und anschließend in einem zweiten Schritt die Aushärtung mit UV-Strahlung erfolgt. Außerdem ist die Aushärtung von pigmentierten Pulverlacken in größeren Schichtdicken schwierig, da die UV-Strahlung von den farbgebenden Komponenten absorbiert wird und damit eine Durchhärtung der Beschichtung erschwert ist.

Die kürzlich entwickelte Technologie zur Erzeugung von Strahlung mit hoher Intensität im nahen Infrarot-Bereich (NIR), dem Wellenlängenbereich von 750 bis 1200 nm, bietet eine weitere Möglichkeit zur Aushärtung von Lackzusammensetzungen. Die im Bereich Analytik oder der Prozeßkontrolle eingesetzte NIR-Strahlungsintensität reicht dagegen nicht aus, um eine Erwärmung des Substrates zu erzielen oder um chemische Reaktionen, wie z.B. die Vernetzung eines Lackes, in Gang zu setzen.

In dem Beitrag "Sekundenschnelle Aushärtung von Pulverlack" (Kai Bär, JOT 2/98) wird beschrieben, daß sich Pulverlacke mit Hilfe von NIR-Strahlung hoher Intensität aushärten lassen, ohne daß es zu einer wesentlichen Erwärmung des Substrates kommt. Die NTR-Technologie erlaubt das Aufschmelzen und die Aushärtung von Pulverlacken in einem einzigen Prozeßschritt, ohne die oben beschriebenen Nachteile der konventionellen thermischen Aushärtung bzw. der UV-Härtung. Es wird dabei eine gleichmäßige Erwärmung der gesamten Lackschicht und eine Reflexion der Strahlung an metallischen Oberflächen erreicht. Für dieses Aushärtungsverfahren besonders geeignete Pulverlacke und insbesondere die Art und Weise, wie maßgeschneiderte Pulverlacke für die Aushärtung mit Hilfe von NIR-Strahlung entwickelt werden können, sind nicht beschrieben.

Die deutsche Patentanmeldung 198 06 445.4 beschreibt Pulverlack-Bindemittel, die besonders für die Aushärtung von Pulverlacken durch NIR-Strahlung geeignet sind. Das Absorptionsverhalten von Pulverlacken, die mit diesen Bindemitteln hergestellt werden, sowie der Einfluß des Absorptionsverhaltens auf die Aushärtungscharakteristik und die Beschichtungseigenschaften werden dort nicht erwähnt.

Insbesondere eingefärbte Pulverlacke mit einem gleichen Bindemittelsystem, aber unterschiedlicher Zusammensetzung der übrigen Bestandteile, können erhebliche Unterschiede im Absorptionsverhalten in der NIR-Aushärtung aufweisen. Unter identischen Bedingungen bezüglich Strahlungsintensität und Bestrahlungsdauer sind unterschiedliche Aufheizraten der Lackschicht sowie unterschiedliche Aushärtungsgeschwindigkeiten festzustellen. Beispielsweise wird ein dem Stand der Technik entsprechender handelsüblicher weißer Pulverlack (Durotherm AL93-9010, Herberts Pulverlack GmbH) bei Bestrahlung mit einer handelsüblichen NIR-Strahlungsquelle (erhältlich von der Fa. Industrie SerVis) in einem Zeitraum von 30 Sekunden vollständig ausgehärtet, während ein dem Stand der Technik entsprechender handelsüblicher schwarzer Pulverlack mit gleicher Bindemittelbasis (Durotherm AL93-9017, Herberts Pulverlack GmbH) unter den gleichen Bestrahlungsbedingungen eine Aushärtungszeit von 5 Sekunden erreicht.

Aufgabe der Erfindung ist es daher, ein Verfahren zur Härtung von Pulverlacken bereitzustellen, das es ermöglicht, Pulverlacke mit Hilfe von NIR-Strahlung unabhängig vom Farbton oder vom eingesetzten Bindemittelsystem sowie weiteren Lackkomponenten mit nahezu gleichen Aushärtungszeiten und Oberflächentemperaturen der Substrate auszuhärten. Weiterhin soll das Absorptionsverhalten im NIR-Bereich von Pulverlacken eingestellt werden können, um die Absorptionscharakteristik auf die gewünschten Anwendungsbedingungen wie z.B. die Schichtdicke oder das zu beschichtende Substrat anpassen zu können.

Im Rahmen der Erfindung hat es sich gezeigt, daß das Absorptionsverhalten einer Pulverlackzusammensetzung durch Variation ihres Gehalts an Bariumsulfat und/oder Aluminiumoxid und/oder Ruß geändert bzw. zur Erzielung gewünschter Bedingungen angepaßt werden kann.

Ein Gegenstand der Erfindung ist daher die Verwendung von Bariumsulfat, Aluminiumoxid und/oder Ruß zur Steuerung des Absoptionsverhaltens von Pulverlacken bei der Aushärtung mit Strahlung im nahen Infrarotbereich (NIR-Strahlung), insbesondere die Steuerung der Aushärtungszeiten und/oder der Oberflächentemperaturen von mit den Pulverlacken beschichteten Substraten.

Ein weiterer Gegenstand der Erfindung ist ein Verfahren zur Härtung von Pulverlacken durch Beschichten von Substraten mit den Pulverlacken und Bestrahlen durch Strahlung im nahen Infrarotbereich (NIR-Strahlung), das dadurch gekennzeichnet ist, daß man die Aushärtungszeiten und/oder die durch die Bestrahlung während bestimmter Aushärtungszeiten erzielbaren Oberflächentemperaturen der mit den Pulverlacken beschichteten Substrate durch Einstellen des Gehalts der Pulverlacke an Bariumsulfat und/oder Aluminiumoxid auf 1 bis 50 Gew.-% und/oder Einstellen des Gehalts der Pulverlacke an Ruß auf 0,1 bis 5 Gew.-% regelt, wobei sich die Gewichtsprozente jeweils auf die gesamte Pulverlackzusammensetzung beziehen.

Erfindungsgemäß wird so gearbeitet, daß der Gesamtgehalt an Bariumsulfat und Aluminiumoxid in den Pulverlacken 50 Gew.-% nicht überschreitet, wobei beim zusätzlichen Vorliegen von Ruß der Gesamtgehalt an Bariumsulfat und/oder Aluminiumoxid zusammen mit Ruß 55 Gew.-% nicht überschreitet.

Der Anteil von Bariumsulfat und/oder Aluminiumoxid und/oder Ruß beeinflußt entscheidend das Absorptionsverhalten der gesamten Pulverlackzusammensetzung und erlaubt eine gezielte Einstellung der NIR-Aushärtungscharahteristik. Durch einen erhöhten Anteil an Bariumsulfat und/oder Aluminiumoxid und/oder Ruß kann beispielsweise das Absorptionsvermögen der Pulverlackzusammensetzung für Strahlung im NIR-Wellenlängenbereich stark ansteigen, und unter konstanten Strahlungsbedingungen können höhere Oberflächentemperaturen und kürzere Aushärtungszeiten erzielt werden.

Weiterhin kann das Absorptionsverhalten der Pulverlackzusammensetzungen an die jeweilige Anwendung des Pulverlackes angepaßt werden. Beispielsweise kann es in Abhängigkeit vom Substrat wünschenswert sein, die Absorption der Strahlung in der Lackschicht zu erhöhen, um die Erwärmung des Substrates zu minimieren. In diesen Fällen sind Formulierungen bevorzugt, deren Anteil an Bariumsulfat und/oder Aluminiumoxid und/oder Ruß erhöht wird, beispielsweise in den oberen Bereich der vorstehend angegebenen Mengen (Gew.-%).

Für sehr dicke Pulverlackschichten kann es erforderlich sein, die NIR-Absorption zu verringern, um ein Aufschmelzen und Aushärten der tiefer liegenden Pulverschicht zu gewährleisten. Ist die NIR-Absorption zu hoch, so wird die gesamte Strahlung an der Oberfläche der Lackschicht absorbiert, was zu einem schlechten Verlauf und einer unvollständigen Aushärtung der Beschichtung an der Substratoberfläche führt.

Für derartige Anwendungen sind Pulverlackzusammensetzungen geeignet, deren Anteil an Bariumsulfat und/oder Aluminiumoxid und/oder Ruß gesenkt wird, beispielsweise auf den unteren Bereich der vorstehend angegebenen Mengen (Gew.-%)..

Für dünne Schichten kann eine hohe NIR-Absorption der Pulverlackzusammensetzung wünschenswert sein, um eine möglichst hohe Aufheiz- und Aushärtungsgeschwindigkeit realisieren zu können, so daß ein erhöhter Anteil an Bariumsulfat und/oder Aluminiumoxid und/oder Ruß verwendet wird.

Erfindungsgemäß ist die Verwendung von Bariumsulfat und/oder Aluminiumoxid mit einem Gehalt von 1 bis 50 Gew.-%, insbesondere vn 5 bis 35 Gew.-%, und/oder Ruß mit einem Gehalt von 0,1 bis 5 Gew.-%, jeweils bezogen auf die gesamte Pulverlackzusammensetzung, geeignet zur erfindungsgemäßen Einstellung der Pulverlackzusammensetzung.

Es hat sich gezeigt, daß Bariumsulfat und/oder Aluminiumoxid und/oder Ruß unabhängig von ihrer Modifikation, der Größe der Teilchen sowie weiteren gegebenenfalls vorhandenen Unterschieden in Struktur und Aufbau zum Einsatz kommen können.

Die übrigen Pulverlackbestandteile wie z.B. Harze, Pigmente und Additive liefern ebenfalls einen Beitrag zum NIR-Absorptionsverhalten der Gesamtzusammensetzung, welcher jedoch deutlich geringer ist als der Beitrag des erfindungsgemäßen Gehaltes an Bariumsulfat und/oder Aluminiumoxid und/oder Ruß.

Wenn von Pulverlacken ausgegangen wird, die bereits Bariumsulfat, Aluminiumoxid und/oder Ruß enthalten, so kann die Änderung des Anteils an Bariumsulfat bzw. Aluminiumoxid bzw. Ruß in den Pulverlackzusammensetzungen durch andere Pigmente und/oder Füllstoffe ausgeglichen werden. Beispielsweise können zur Verlängerung der Aushärtungszeit Anteile von Bariumsulfat bzw. Aluminiumoxid teilweise durch andere Füllstoffe ersetzt werden, die eine sehr geringe Absorption von NIR-Strahlung zeigen. Derartige Pigmente und/oder Füllstoffe können z.B. Calciumcarbonat, Titandioxid, Aluminiumhydroxid, Dolomit und Talk sein.

Bei einer Änderung des Anteils an Bariumsulfat bzw. Aluminiumoxid kann gegebenenfalls zusätzlich eine Anpassung der Pigmentierung zur Kompensation von leichten Farbtonverschiebungen erforderlich sein. Eine Änderung des Ruß-Anteils kann zu größeren Veränderungen des Farbtones führen.

Als weitere Bestandteile in den erfindungsgemäßen Pulverlacken können die üblichen Bindemittel/Härter-Systeme wie z.B. Polyesterharze mit niedermolekularen Epoxid- oder Hydroxyalkylamidhärtern, Epoxy/Polyester-Hybridsysteme, Epoxidharze mit Dicyandiamidhärtern, Carbonsäurehärtern oder phenolischen Härtern, oder auch epoxidfunktionalisierte Acrylatharze mit Carbonsäure- oder Carbonsäureanhydrid-Härtern sowie übliche Pigmente und/oder Füllstoffe und übliche Additive wie z.B. Verlaufsmittel, Entgasungshilfsmittel, Texturierungsmittel enthalten sein. Zur Einfärbung der erfindungsgemäßen Pulverlackformulierungen können die üblichen organischen oder anorganischen Pigmente eingesetzt werden.

Die erfindungsgemäß einsetzbaren Pulverlacke können in üblicher Weise hergestellt werden; die Zusätze Bariumsulfat, Aluminiumoxid und/oder Ruß können dabei in üblicher Weise mit den übrigen Pulverbestandteilen vermischt oder in Pulverbestandteile, wie beispielsweise Bindemittel und/oder Härter eingearbeitet werden.

Die Applikation des Pulvers auf das zu beschichtende Substrat kann nach den bekannten elektrostatischen Sprühverfahren z.B. mit Hilfe von Corona- oder Tribo-Sprühpistolen oder mit anderen geeigneten Verfahren zur Pulverapplikation erfolgen.

Zur Aushärtung kann die aufgebrachte Pulverlackzusammensetzung beispielsweise mit Hilfe eines üblichen energiereichen NIR-Strahlers, z.B. mit einer Strahleroberflächentemperatur der Glühwendel zwischen 2000 und 3000 K bestrahlt werden; geeignet sind zum Beispiel solche Strahler, deren Emissionsspektrum ein Maximum zwischen 750 und 1200 nm aufweist; die Leistung beträgt beispielsweise mehr als 1 W/cm², bevorzugt mehr als 10 W/cm²; der Bestrahlungszeitraum beträgt beispielsweise 1 bis 300 Sekunden. Bei der Bestrahlung schmilzt das Pulver zunächst auf und härtet anschließend zum Beispiel in einem Zeitraum von 1 bis 300 Sekunden aus.

Es ist auch möglich zur Aushärtung eine Kombination aus NIR-Strahlern und konventionellen Wärmequellen wie Konvektionsöfen oder Infrarotstrahlern einzusetzen. Falls erforderlich, ist es auch möglich, eine gleichmäßige Bestrahlung dreidimensionaler Objekte mit Hilfe von Reflektoren für NIR-Strahlung zu erreichen.

Das erfindungsgemäße Verfahren eignet sich besonders zur Beschichtung von temperaturempfindlichen Substraten für die Beschichtung von großen, massiven Bauteilen oder für Beschichtungsaufgaben, für die eine hohe Aushärtungsgeschwindigkeit erforderlich ist. Beispiele für temperaturempfindliche Substrate sind Naturholz- oder Holzwerkstoffoberflächen, Kunststoffoberflächen oder Metallteile, die weitere wärmeempfindliche Komponenten wie z.B. Flüssigkeiten oder Schmierstoffe enthalten. Darüber hinaus sind auch übliche Metallsubstrate beschichtbar.

Insbesondere können auch funktionelle Beschichtungen auf Rohre, Metallteile zur Betonverstärkung oder Konstruktionselemente erfolgen sowie Beschichtungen auf großflächige Bauteile, die nicht in einem Ofen erwärmt werden können, beispielsweise Stahlkonstruktionen, Brücken, Schiffe.

Das erfindungsgemäße Verfahren läßt sich auch für das Coil-Coating-Verfahren mit Beschichtungsgeschwindigkeiten von > 100 m/min einsetzen.

Das erfindungsgemäße Verfahren ermöglicht die Einstellung des Absorptionsverhaltens von Pulverlacken und damit insbesondere die Erzielung eines regelbaren Aushärteverhaltens der Pulverlacke sowie von steuerbaren Oberflächentemperaturen der beschichteten Substrate. Es gelingt, Pulverlacke mit unterschiedlichen Farben oder Bindemittelsystemen unter gleichen Bedingungen durch NIR-Strahlung auszuhärten, wodurch sich erhebliche Vorteile für den Verarbeiter von Pulverlacken beim Einsatz verschiedener Pulverlacke in einer Beschichtungsanlage ergeben. So ist z.B. ein schneller Farbwechsel während der Pulververarbeitung möglich, ohne daß Anlagenparameter wie Aushärtungszeit oder Intensität der Strahlungsquelle aufwendig an den Farbton angepaßt werden müssen.

Die beim erfindungsgemäßen Verfahren verwendeten mit Bariumsulfat, Aluminiumoxid und/oder Ruß modifizierten Pulverlacke können vorteilhaft für das Aushärtungsverfahren mittels NIR-Strahlung eingesetzt werden und ergeben Beschichtungen mit ausgezeichneter Qualität.

Die nachfolgenden Beispiele erläutern die Erfindung:

Die in den Tabellen aufgelisteten Pulverlackformulierungen wurden nach dem für die Pulverlackherstellung üblichen Verfahren durch intensives Vermischen der Komponenten, Extrudieren und Mahlen in Beschichtungspulver überführt. Die Pulver wurden mit gleicher Schichtdicke elektrostatisch auf Prüfbleche aus Aluminium mit Hilfe einer Corona Pulversprühpistole appliziert. Die Aushärtung erfolgte auf einer Bandanlage, die mit einem NIR-Strahler der Fa. Industrie SerVis mit einer Leistung von maximal 400 kW/m² ausgerüstet ist. Die Strahlungsintensität sowie der Abstand des Strahlers zur Substratoberfläche wurde konstant gehalten. Die Bestrahlungszeit wurde über die Änderung der Bandgeschwindigkeit variiert. In den Tabellen wird die Bestrahlungszeit angegeben, die der Bandgeschwindigkeit entspricht, bei der die Beschichtung vollständig ausgehärtet ist (Aushärtungszeit). Als Kriterium für die Aushärtung wurden die mechanischen Eigenschaften sowie die Lösungsmittelbeständigkeit gemessen und mit konventionell bei hoher Temperatur im Umluftofen eingebrannten Proben der gleichen Formulierung verglichen. Die in de Tabelle angegebenen Aushärtungszeiten entsprechen der Bandgeschwindigkeit, für die gerade die Eigenschaften der Referenzprobe erhalten wurden.

Innerhalb der einzelnen Bindemittelsysteme wurden die Bestandteile der Formulierungen weitestgehend konstant gehalten. Die Variation des Gehaltes an Bariumsulfat, Aluminiumoxid und Ruß erfolgte durch Austausch von Titandioxid in der Formulierung, so daß die Konzentration der übrigen Hauptkomponenten konstant gehalten werden konnte. Alle Mengen sind in Gew.-% angegeben.

Nicht erfindungsgemäße Formulierungen sind mit einem * gekennzeichnet. Versuche, in denen keine Aushärtung erzielt wurde, sind mit k.A. gekennzeichnet. Hier kommt es bei zu langen Bestrahlungszeiten zu Verlaufsstörungen oder Blasenbildung, ohne daß der Film aushärtet.

### BEISPIEL 1:

### Außenbeständige Pulverlacke auf Basis Polyester mit Araldit PT 910 (Ciba Chemicals)

Alle Formulierungen enthalten 57 % Polyesterharze, 5,2 % Härter Araldit PT 910 sowie 4,5 % Verlaufs- und Entgasungsmittel. Die roten Pulverlacke wurden mit 1 % eines anorganischen Rotpigments eingefärbt, die gelben Pulverlacke mit 2 % eines anorganischen Gelbpigments.

### Tabelle zu Beispiel 1

| Nr. | Farbton | Anteil Bariumsulfat (Gew.-%) | Anteil an Aluminium oxid (Gew.-%) | Anteil Titandioxid (Gew.-%) | Aushärtungszeit [s] |
|---|---|---|---|---|---|
| 1.1* | gelb | 0 | 0 | 31 | k.A. |
| 1.2 | gelb | 13 | 0 | 18 | 12 |
| 1. 3 | gelb | 26 | 0 | 5 | 9 |
| 1.4 | gelb | 31 | 0 | 0 | 8 |
| 1.5* | rot | 0 | 0 | 33,2 | k.A. |
| 1.6 | rot | 16 | 0 | 17,2 | 10 |
| 1.7 | rot | 24 | 0 | 9,2 | 9 |
| 1.8 | rot | 33,2 | 0 | 0 | 8 |
| 1.9 | gelb | 0 | 20 | 11,3 | 12 |

### BEISPIEL 2:

Pulverlacke auf Basis Epoxidharz.

Alle Formulierungen enthalten 60 % Epoxidharz, 3,3 % Härter Dicyandiamid sowie 1,4 % Entgasungsmittel und Verlaufsmittel.

### Tabelle zu Beispiel 2

| Nr. | Farbton | Anteil Bariumsulfat (Gew.-%) | Anteil Titandioxid (Gew.-%) | Anteil Ruß Gew.-%) | Aushärtungszeit [s] |
|---|---|---|---|---|---|
| 2.1 * | weiß | 0 | 35,3 | 0 | k.A. |
| 2.2 | weiß | 20 | 15,3 | 0 | 13 |
| 2.3 | weiß | 35,3 | 0 | 0 | 10 |
| 2.4 | grau | 35 | 0,2 | 0,1 | 3,5 |
| 2.5 | grau | 25 | 10,2 | 0,1 | 3,7 |
| 2.6 | grau | 15 | 20,2 | 0,1 | 4 |
| 2.7 | grau | 0 | 34,3 | 1 | 5 |

### BEISPIEL 3:

### Pulverlacke auf Basis Polyester/Epoxy-Hybrid-Bindemittel

Alle Formulierungen enthalten 40,4 % Polyesterharz, 18 % Epoxidharz, 1,6 % Verlaufs- und Entgasungsmittel sowie 3 % organisches Blaupigment.

### Tabelle zu Beispiel 3

| Nr. | Farbton | Anteil Bariumsulfat (Gew.-%) | Anteil Titandioxid (Gew.-%) | Aushärtungszeit [s] |
|---|---|---|---|---|
| 3.1* | blau | 0 | 37 | k.A. |
| 3.2 | blau | 15 | 22 | 9 |
| 3.3 | blau | 35 | 2 | 7 |

## Patentansprüche

1. Verfahren zur Härtung von Pulverlacken durch Beschichten von Substraten mit den Pulverlacken und Bestrahlen durch Strahlung im nahen Infrarotbereich (NIR-Strahlung), **dadurch gekennzeichnet, daß** man die Aushärtungszeiten und/oder die durch die Bestrahlung während bestimmter Aushärtungszeiten erzielbaren Oberflächentemperaturen der mit den Pulverlacken beschichteten Substrate durch Einstellen des Gehalts der Pulverlacke an Bariumsulfat und/oder Aluminiumoxid auf 1 bis 50 Gew.- % und/oder Einstellen des Gehalts der Pulverlacke an Ruß auf 0,1 bis 5 Gew.-% regelt, wobei sich die Gewichtsprozente jeweils auf die gesamte Pulverlackzusammensetzung beziehen.

2. Verfahren nach Anspruch 1, **dadurch gekennzeichnet, daß** 5 bis 35 Gew.-% Bariumsulfat und/oder Aluminiumoxid verwendet werden.

3. Verfahren nach Anspruch 1 oder 2, **dadurch gekennzeichnet, daß** NIR-Strahlung mit einem Maximum der Intensitätsverteilung im Wellenlängenbereich von 750 bis 1200 nm verwendet wird.

4. Verfahren nach Anspruch 1 bis 3, **dadurch gekennzeichnet, daß** die Bestrahlung und die Aushärtung in einem Zeitraum von jeweils 1 bis 300 Sekunden erfolgen.

5. Verwendung von Bariumsulfat, Aluminiumoxid und/oder Ruß zur Steuerung des Absorptionsverhaltens von Pulverlacken bei der Aushärtung durch Bestrahlen mit Strahlung im nahen Infrarotbereich (NIR-Strahlung).

6. Verwendung von Bariumsulfat, Aluminiumoxid und/oder Ruß zur Steuerung der Aushärtungszeiten und/oder der Oberflächentemperaturen von mit Pulverlacken beschichteten Substraten bei deren Aushärtung durch Bestrahlen mit Strahlung im nahen Infrarotbereich (NIR-Strahlung).

## Claims

1. Method of curing powder coatings by coating substrates with the powder coatings and exposing them to radiation in the near infrared range (NIR radiation), **characterised in that** the curing times of the substrates coated with the powder coatings and/or their surface temperatures achievable by exposure to radiation for particular curing times are regulated by adjusting the barium sulfate and/or aluminium oxide content of the powder coatings to from 1 to 50 wt.% and/or adjusting the carbon black content of the powder coatings to from 0.1 to 5 wt.%, the percentages by weight being based in each case on the total powder coating composition.

2. Method according to claim 1, **characterised in that** from 5 to 35 wt.% barium sulfate and/or aluminium oxide are used.

3. Method according to claim 1 or 2, **characterised in that** NIR radiation having a maximum intensity distribution in the wavelength range of from 750 to 1200 nm is used.

4. Method according to claim 1 to 3, **characterised in that** the exposure to radiation and the curing are carried out within a period of in each case from 1 to 300 seconds.

5. Use of barium sulfate, aluminium oxide and/or carbon black to control the absorption behaviour of powder coatings during curing by exposure to radiation in the near infrared range (NIR radiation).

6. Use of barium sulfate, aluminium oxide and/or carbon black to control the curing times and/or the surface temperatures of substrates coated with powder coatings during the curing thereof by exposure to radiation in the near infrared range (NIR radiation).

## Revendications

1. Procédé de durcissement de laques en poudre par revêtement de substrats avec des laques en poudre et par irradiation par rayonnement dans la zone des infrarouges proches (rayonnement NIR), **caractérisé en ce que** l'on règle les temps de durcissement et/ou les températures de surface des substrats revêtus de laques en poudre, pouvant être obtenues par irradiation pendant des temps de durcissement déterminés, en réglant la teneur de la laque en poudre en sulfate de baryum et/ou oxyde d'aluminium entre 1 et 50 % en poids et/ou en réglant la teneur de la laque en poudre en suie entre 0,1 et 5 % en poids, les pourcentages en poids se rapportant à chaque fois à la composition totale de la laque en poudre.

2. Procédé selon la revendication 1, **caractérisé en ce que** l'on utilise de 5 à 35 % en poids de sulfate de baryum et/ou d'oxyde d'aluminium.

3. Procédé selon la revendication 1 ou 2, **caractérisé en ce que** le rayonnement NIR est utilisé avec un maximum de répartition de l'intensité dans la zone de longueur d'ondes de 750 à 1200 nm.

4. Procédé selon la revendication 1 à 3, **caractérisé en ce que** l'irradiation et le durcissement s'effectuent dans un intervalle de 1 à 300 secondes respectivement.

5. Utilisation du sulfate de baryum, de l'oxyde d'aluminium et/ou de la suie pour le réglage du comportement d'absorption des laques en poudre lors du durcissement par irradiation avec un rayonnement dans la zone des infrarouges proches (rayonnement NIR).

6. Utilisation du sulfate de baryum, de l'oxyde d'aluminium et/ou de suie pour le réglage des temps de durcissement et/ou des températures de surface des substrats revêtus de laques en poudre lors du durcissement par irradiation avec un rayonnement dans la zone de l'infrarouge proche (rayonnement NIR).
